(19) Europäisches Patentamt
European Patent Office
Office européen des brevets

(11) **EP 2 143 691 A2**

(12) **EUROPÄISCHE PATENTANMELDUNG**

(43) Veröffentlichungstag:
**13.01.2010 Patentblatt 2010/02**

(51) Int Cl.:
*C02F 3/12* (2006.01)          *B01D 65/08* (2006.01)

(21) Anmeldenummer: **09165289.1**

(22) Anmeldetag: **13.07.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.07.2008 DE 102008040373**

(71) Anmelder: **Prieske, Helmut**
**10781 Berlin (DE)**

(72) Erfinder: **Prieske, Helmut**
**10781 Berlin (DE)**

(74) Vertreter: **Gulde Hengelhaupt Ziebig & Schneider**
**Patentanwälte - Rechtsanwälte**
**Wallstraße 58/59**
**10179 Berlin (DE)**

(54) **Membranbioreaktor und Verfahren zur Behandlung von Abwasser**

(57) Die Erfindung betrifft einen Membranbioreaktor (10) zur Behandlung von Abwasser (18), der mindestens ein Membranmodul (20) mit wenigstens zwei in vertikaler Richtung in dem Membranmodul (20) angeordneten Filtermembranen (22) und mindestens eine Vorrichtung (40) zum Einblasen von Luft umfasst, um in dem mindestens einen Membranmodul (20) eine Aufwärtsströmung zu erzeugen, wobei die Vorrichtung (40) zum Einblasen von Luft unterhalb des mindestens einen Membranmoduls (20) angeordnet ist.

Es ist vorgesehen, dass zwischen der Vorrichtung (40) zum Einblasen von Luft und dem Membranmodul (20) wenigstens ein aktives und/oder passives Strömungselement (28) zur Beeinflussung der Aufwärtsströmung angeordnet ist. Des Weiteren umfasst die Erfindung ein Verfahren zur Behandlung von Abwasser (18).

**Fig. 1 B**

Printed by Jouve, 75001 PARIS (FR)

EP 2 143 691 A2

**Beschreibung**

Die Erfindung betrifft einen Membranbioreaktor zur Behandlung von Abwasser, der mindestens ein Membranmodul mit wenigstens zwei in vertikaler Richtung in dem Membranmodul angeordneten Filtermembranen und mindestens eine Vorrichtung zum Einblasen von Luft umfasst, um in dem mindestens einen Membranmodul eine Aufwärtsströmung zu erzeugen, wobei die Vorrichtung zum Einblasen von Luft unterhalb des mindestens einen Membranmoduls angeordnet ist. Des Weiteren umfasst die Erfindung ein entsprechendes Verfahren zur Behandlung von Abwasser.

Die biologische Behandlung von Abwasser in Kläranlagen ist bekannt. Zunehmender Kostendruck und strengere Ablaufgrenzwerte erfordern allerdings neue Techniken in der Abwasseraufbereitung, da bei einer konventionellen Kläranlage die Abtrennung der Biomasse eine der entscheidenden Limitierungen ist. Da die Feststoffabtrennung nicht immer vollständig erfolgt, kann hier ein Teil der Biomasse zusammen mit Kolibakterien und anderen Bakterien die Kläranlage in möglicherweise sensible Gewässer verlassen. Zudem lassen sich wirtschaftlich nur Biomassekonzentrationen zwischen 3 und 5 g/l erzielen. Eine Erhöhung der Biomasse würde die Gesamtkapazität der Kläranlage annähernd proportional steigern.

Die Verwendung von Membranbioreaktoren bietet sich hier als mögliche Lösung an. Dabei wird das herkömmliche aerobe Belebtschlammverfahren (Bioreaktor) mit einer Membranfiltrationsanlage kombiniert. Durch die Anwendung von Membranbioreaktoren in der Abwasserreinigung kann gegenüber konventionellen Kläranlagen mit Sedimentationsbecken eine deutliche Prozessintensivierung erreicht werden. Die Vorteile der Membranbioreaktoren resultieren im Wesentlichen aus dem vollständigen Rückhalt der Biomasse (Klärschlamm), einschließlich der Mikroorganismen und Viren, im Belebungsbecken. Mit Membranbioreaktoren können somit bei geringerer Anlagengröße und Prozessdauer deutlich verbesserte Ablaufqualitäten erreicht werden.

Der Nachteil der Membranbioreaktoren besteht gegenwärtig in ihrer eingeschränkten Wirtschaftlichkeit auf Grund relativ hoher Betriebskosten. Während der Filtration lagert sich auf der Oberfläche der Filtermembranen eine Deckschicht ab und es kommt zu dem so genannten Biofouling. Neben den Mikroorganismen sind vor allem deren extrazelluläre polymere Substanzen für das Biofouling verantwortlich, da sie sich in den Poren der Filtermembranen anlagern und diese verstopfen können. Um Membranfiltrationsprozesse effektiv betreiben zu können, ist es daher wichtig, die Filtermembranporen offen zu halten und den Biofoulingprozess sowie die Anlagerung einer Deckschicht zu verhindern. Dies wird üblicherweise durch das Erzeugen einer Querströmung erreicht, die hohe Betriebskosten verursacht.

In der Konfiguration des Membranbioreaktors als Schlaufenreaktor kann diese Querströmung sehr effizient durch eine Belüftung erreicht werden. Dazu wird das Reaktorvolumen in eine belüftete und eine unbelüftete Region unterteilt. Die unterschiedlichen Gasgehalte in beiden Regionen bilden die treibende Kraft für eine sich ausbildende Zirkulationsströmung. Die Anordnung der Filtermembranen erfolgt zweckmäßigerweise in der Aufstiegsregion, um für die Deckschichtkontrolle die Wirkung der Blasen- und der Zirkulationsströmung zu kombinieren.

Um eine hohe Filtrationsleistung des Membranmoduls dauerhaft zu gewährleisten, muss die Ausbildung dieser Deckschicht im gesamten Modul, das heißt auf allen Filtermembranen gleichmäßig begrenzt werden. Dazu muss eine ausreichende Zirkulationsgeschwindigkeit im Reaktor und eine gleichmäßige Belüftung aller Spalten zwischen den Filtermembranen gewährleistet sein.

Diese Anforderungen werden mit den im Stand der Technik verwendeten Membranbioreaktoren kaum erfüllt. Kennzeichnend für den typischen Aufbau von Membranbioreaktoren als Schlaufenreaktoren sind die Verwendung von Belüftungsrohren und eine kastenförmige Abtrennung der Aufstiegsregion. Dies führt insbesondere an der Umlenkung der Strömung von der Abstiegs- in die Aufstiegsregion zu massiven Ablösungen, was die Zirkulation deutlich reduziert. Zudem steigen die Blasen senkrecht über den Belüftungsrohren auf und verteilen sich nicht gleichmäßig über das gesamte Membranmodul.

Dieses Problem versucht die EP 0 510 328 B1 zu lösen, indem zwischen den Belüftern und den Filtermembranen ein zweites kastenförmiges Bauteil integriert wird. Die derart verlängerte Driftstrecke der aufsteigenden Luftblasen verbessert zwar die Verteilung über das Membranmodul, reduziert allerdings auch die Kapazität der Anlage deutlich, da die Driftstrecke nicht zur eigentlichen Filtration verwendet werden kann.

Ebenfalls von Nachteil ist die Anordnung der Belüfter, im Aufstiegskanal, da dadurch der Kanalquerschnitt blockiert wird und der Strömungswiderstand der Belüftungsrohre die Zirkulationsströmung im Membranmodul behindert. Eine Anordnung der Belüftungsrohre unterhalb des Aufstiegskanals ist ebenfalls von Nachteil, da die seitlich eintretende Flüssigkeit die Blasen in der Mitte des Aufstiegskanals konzentriert.

Aufgabe der Erfindung ist es, einen Membranbioreaktor zur Verfügung zu stellen, in dem bei einer gleichmäßigen Belüftung aller Filtermembranen eines Membranmoduls eine ausreichend hohe Strömungsgeschwindigkeit realisiert wird, so dass kontinuierlich eine gute Filtrationsleistung erreicht werden kann.

Die Aufgabe wird erfindungsgemäß mit einem Membranbioreaktor mit den Merkmalen des Anspruchs 1 gelöst. Bevorzugte Ausgestaltungen sind in den Unteransprüchen beschrieben.

Die Erfindung betrifft einen Membranbioreaktor zur Behandlung von Abwasser umfassend mindestens ein Membranmodul, das in dem Membranbioreaktor angeordnet ist, wobei das Membranmodul wenigstens zwei Filtermembranen aufweist, die in vertikaler Richtung in dem Membranmodul in einem Abstand zueinander angeordnet sind, und mindestens eine Vorrichtung zum Einblasen von Luft, um in dem mindestens einen Membranmodul eine Aufwärtsströmung zu erzeugen, wobei die Vorrichtung zum Einblasen von Luft unterhalb des mindestens einen Membranmoduls in dem Membranbioreaktor angeordnet ist und zwischen der Vorrichtung zum Einblasen von Luft und dem Membranmodul wenigstens ein aktives und/oder passives Strömungselement zur Beeinflussung der Aufwärtsströmung angeordnet ist.

Die erfindungsgemäße Anordnung der Vorrichtung zum Einblasen von Luft unterhalb des Membranmoduls ist vorteilhaft, da dadurch der Querschnitt des Membranmoduls der Aufwärtsströmung vollständig zur Verfügung steht und nicht von Belüftungsrohren verkleinert wird. Dadurch wird der Strömungswiderstand reduziert und die Entstehung von Ablösungen verhindert.

Mittels des erfindungsgemäßen aktiven und/oder passiven Strömungselements gelingt es ferner, die aufsteigenden Luftblasen im Membranmodul gleichmäßig zu verteilen und alle Filtermembranen gleichmäßig zu belüften. Die durch die Aufstiegsströmung erzeugte Konzentrierung der Luftblasen in der Mitte des Membranmoduls wird vorteilhafterweise als automatische Fokussierung der Luftblasen verwendet, um sie dann mittels der aktiven und/oder passiven Strömungselemente umzulenken. Somit entstehen in dem erfindungsgemäßen Membranbioreaktor keine Toträume oder schwächer belüfteten Bereiche, in denen sich vermehrt Biomasse absetzen könnte, wodurch die Filtrationsrate herabgesetzt würde. Der erfindungsgemäße Membranbioreaktor kann zur Aufbereitung jeglicher Abwässer, insbesondere von Industrie- und Haushaltsabwasser verwendet werden.

In einer bevorzugen Ausführungsform ist die Vorrichtung zum Einblasen von Luft auf dem Boden des Membranbioreaktors angeordnet. Dadurch wird der vorhandene Platz des Membranbioreaktors optimal ausgenutzt und es werden keine weiteren Befestigungseinrichtungen benötigt. Gleichzeitig wird die belüftete Höhe und damit auch die Differenz im hydrostatischen Druck zwischen der Aufstiegsregion im Membranmodul und der Abstiegsregion außerhalb des Membranmoduls vergrößert, so dass größere Zirkulationsgeschwindigkeiten bei gleicher Belüftungsintensität erhalten werden. Zudem ist bei einer möglichst bodennahen Anordnung der Vorrichtung zum Einblasen von Luft gewährleistet, dass die Zirkulationsströmung ungehindert in das Membranmodul eintreten kann und kein zusätzlicher Widerstand erzeugt wird. Dadurch werden die Energiekosten zum Aufrechterhalten des Zirkulationsstroms verringert bzw. die Filtrationsleistung der erfindungsgemäßen Membranbioreaktoren erhöht.

In einer weiteren Ausführungsform ist die Vorrichtung zum Einblasen von Luft auf einer höhenverstellbaren Befestigungsvorrichtung montiert. Bei einer höhenverstellbaren Anordnung der Vorrichtung zum Einblasen von Luft kann der Abstand auf verschiedene aktive und/oder passive Strömungselemente abgestimmt werden. Allerdings wird die Vorrichtung zum Einblasen von Luft in jedem Falle unterhalb des Eintrittsbereichs der zirkulären Strömung in das Membranmodul angeordnet. Der Abstand zwischen der Unterkante der Aufstiegsregion und der Vorrichtung zum Einblasen von Luft wird erfindungsgemäß derart gewählt, dass die Aufwärtsströmung im Kanal bei vorgegebener eingeblasener Luftmenge maximal wird. Vorzugsweise beträgt dieser Abstand 5 bis 50 cm, vorzugsweise 35 cm.

In einer weiteren Ausführungsform ist die Vorrichtung zum Einblasen von Luft ein Plattenbelüfter. Durch einen Plattenbelüfter wird vorteilhafterweise bereits eine kontinuierliche Fläche aus aufsteigenden Luftblasen erzeugt. Dabei bestimmt der Abstand zwischen den einzelnen Luftauslässen des Plattenbelüfters die Dichte des Luftblasenteppichs.

Die von der Vorrichtung zum Einblasen von Luft erzeugten Luftblasen dürfen einen Maximaldurchmesser nicht überschreiten, der durch den Abstand zwischen den Filtermembranen eines Membranmoduls vorgegeben wird. Vorzugsweise sollte der Durchmesser der Luftblasen kleiner als der Abstand zwischen den einzelnen Filtermembranen eines Membranmoduls sein. Die von der Vorrichtung zum Einblasen von Luft erzeugten Luftblasen weisen vorzugsweise einen Durchmesser von 2 bis 8 mm, insbesondere 3 bis 5 mm auf. Luftblasen dieser Größe sind in der Lage, zwischen den einzelnen Filtermembranen der Membranmodule aufzusteigen und eine gleichmäßige Belüftung zu gewährleisten.

Üblicherweise werden in dem erfindungsgemäßen Membranbioreaktor Membranplattenmodule eingesetzt, da sie auf Grund der gut zu kontrollierenden hydrodynamischen Bedingungen weniger zum Verblocken neigen.

Ein Membranmodul umfasst mindestens zwei Filtermembranen, die in einem festgelegten Abstand zueinander angeordnet sind. Dieser Abstand wird derart gewählt, dass zwischen den einzelnen Filtermembranen eine ausreichende Belüftung und eine ausreichende Strömung erfolgen kann. Dabei muss insbesondere beachtet werden, dass auf Grund des höheren Biomasseanteils in Membranbioreaktoren, von bis zu 20 g/l, das Abwasser eine größere Viskosität als in herkömmlichen Belebtschlammbecken aufweist. Auch besteht die Gefahr, dass die Filtermembranzwischenräume durch größere Aggregate verstopfen. Daher darf der Abstand zwischen den einzelnen Filtermembranen nicht zu klein gewählt werden. Ein zu großer Abstand wiederum lässt benutzbaren Raum ungenutzt und schränkt somit die Kapazität der Membranbioreaktoren ein. Ein bevorzugter Abstand zwischen den einzelnen Filtermembranen in einem Membranmodul beträgt 3 bis 12 mm, vorzugsweise 6 bis 10 mm, noch bevorzugter 7 mm.

Geeignete Filtermembranen sind im Stand der Technik beschrieben und dem Fachmann bekannt. Durch den statischen Druck der Flüssigkeit wird die Biomasse gegen die Filtermembran gedrückt, und das Wasser abfiltriert. Wahlweise kann die Fließgeschwindigkeit mittels Unterdruck auf der Permeatseite erhöht werden. Die Porengröße bestimmt sich aus der Art der Anwendung. Mit Mikro- und Ultrafiltrationsmembranen können bereits Bakterien abgetrennt werden. Hier sind außerdem die transmembranen Druckverluste genügend niedrig, so dass nur wenig Energie für die Aufrechterhaltung des Unterdruckes benötigt wird. Vorzugsweise werden Ultrafiltrationsmembranen eingesetzt, die zusätzlich auch Viren abtrennen und eine glattere Oberflächenstruktur aufweisen, so dass sie sich erheblich besser reinigen lassen.

Die einzelnen Filtermembranen eines Membranmoduls werden durch Seitenwände von der Umgebung abgetrennt. Dabei können erfindungsgemäß die Seitenwände des Membranmoduls in Richtung des Bodens mit einem Überhang über die Filtermembranen hinausragen. Dieser Überhang ist vorzugsweise kleiner als 50 cm. An dem Überhang entgegengesetzten Ende der Seitenwände befindet sich eine Befestigungsvorrichtung, mit der das Membranmodul im Membranbioreaktor positioniert wird. Geeignete Befestigungsvorrichtungen sind dem Fachmann bekannt.

In einer bevorzugten Ausführungsform der Erfindung wird das aktive und/oder passive Strömungselement auf der den Filtermembranen zugewandten Seite des Überhangs befestigt. Dabei kann das aktive und/oder passive Strömungselement eine gleich große oder kürzere vertikale Ausdehnung als die Größe des Überhangs aufweisen. Aktive und/oder passive Strömungselemente mit einer kürzeren vertikalen Ausdehnung werden vorzugsweise an dem den Filtermembranen gegenüberliegenden Ende des Überhangs positioniert. Das aktive und/oder passive Strömungselement ist somit am Beginn des durch die Seitenwände des Membranmoduls gebildeten Kanals positioniert und engt diesen ein. Dabei wird vorzugsweise der Einstrombereich in das Membranmodul verringert, was zu einer Erhöhung der Fließgeschwindigkeit führt. Anschließend wird der Luftblasenstrom in Richtung der Seitenwände umgeleitet, wo sie dann entlang der Seitenwände aufsteigen. Somit ergibt sich für die erfindungsgemäße Anordnung ein Strömungsprofil, das den gesamten Innenraum des Membranmoduls umfasst. Das aktive und/oder passive Strömungselement ist demnach derart geformt, dass es sich von der breitesten Stelle an verjüngt, wobei sich die breiteste Stelle am bodennahen Anfang des Membranmoduls befindet. Vorzugsweise ist die Form des aktiven und/oder passiven Strömungselementes der Form des Ablösegebietes nachempfunden, welches sich ergeben würde, wenn die aktiven und/oder passiven Strömungselemente nicht vorhanden wären. Verwirbelungen können durch die aktiven und/oder passiven Strömungselemente somit nahezu vollständig vermieden werden. Vorzugsweise ist das aktive und/oder passive Strömungselement dreieckig oder tropfenförmig im Querschnitt. Weiterhin kann das aktive und/oder passive Strömungselement auch die Form einer Flugzeugtragfläche, d.h. ein Tragflächenprofil oder eine andere Querschnittform aufweisen. Die Form des aktiven und/oder passiven Strömungselementes ist derart zu wählen, dass die Strömung durch die aktiven und/oder passiven Strömungselemente so beeinflusst wird, dass sie sich möglichst gleichmäßig über den gesamten Querschnitt des Membranmoduls verteilt.

In einer weiteren Ausgestaltung der Erfindung kann das aktive und/oder passive Strömungselement auch eine verstellbare Klappe oder ein in der Seitenwand versenkbares Bauteil sein. Vorteilhafterweise kann mit einer derartigen variablen Ausgestaltung die Verengung des Membrankanals und damit die Strömungsgeschwindigkeit eingestellt werden. Gleichzeitig wird der Winkel verändert, in dem die aufsteigenden Luftblasen auf die Seitenwände des Membranmoduls auftreffen. Bei einer verstellbaren Klappe ist erfindungsgemäß der durch ein Aufstellen der Klappe entstehende Hohlraum mit einer nichtpermeablen, vorzugsweise elastischen Membran verschlossen.

Vorteilhafterweise werden durch die Strömungsumlenkung die Strömungs-Ablösungen (Strömungsabriss) von Biomasse im unteren Bereich des Membranmoduls reduziert, was insgesamt zu einer deutlichen Reduzierung des Strömungswiderstandes für die Zirkulation führt. Diese Reduzierung führt in vorteilhafter Weise zur Verminderung der Energiekosten, die zur Aufrechterhaltung des zum Betrieb benötigten Zirkulationsstroms erforderlich sind.

Vorzugsweise besteht das aktive und/oder passive Strömungselement aus einem biologisch und chemisch beständigen, nicht porösen Material. Insbesondere werden hierfür dem Fachmann bekannte Kunststoffe, wie Polyvinylchlorid, Polyethylen, Polypropylen oder Polytetrafluorethylen verwendet. In einer besonders bevorzugten Ausgestaltung besteht das aktive und/oder passive Strömungselement aus Polyvinylchlorid, Beton oder dergleichen.

In einer weiteren bevorzugten Ausgestaltung ist in die Oberfläche des aktiven und/oder passiven Strömungselements eine zusätzliche Vorrichtung zum Einblasen von Luft integriert. Dabei können zusätzliche Belüfter als Oberflächenelemente auf den aktiven und/oder passiven Strömungselementen angeordnet sein oder die zusätzlichen Luftauslässe sind direkt in die Strömungselemente integriert. Diese dienen dann einer aktiven Beeinflussung der Strömung, die je nach Stellung die Strömungsflächen der Strömungselemente die Strömung verändern. Auch so ist eine aktive Beeinflussung der Strömung möglich. Diese Oberflächenelemente können beispielsweise verstellbare Klappen, aufblasbare Membrane oder dergleichen sein. Die Belüftung an der Innenseite der aktiven und/oder passiven Strömungselemente verbessert die Begasung der Randgebiete des Membranmoduls, insbesondere bei kleinen Strömungsgeschwindigkeiten, zusätzlich. Bei dieser Ausführungsvariante wird die eingeblasene Luft auf die Vorrichtung zum Einblasen von Luft unterhalb des Membranmoduls und die beiden aktiven und/oder passiven Strömungselemente aufgeteilt. Durch eine variable Aufteilung kann auch bei unterschiedlichen Zirkulationsgeschwindigkeiten eine ausreichende Begasung der Randgebiete gewährleistet werden.

Die zusätzliche Belüftung über das aktive und/oder passive Strömungselement bietet zudem weiteres Einsparpotential zur Reduzierung des Energieaufwands. An den aktiven und/oder passiven Strömungselementen ergibt sich bei höheren Geschwindigkeiten ein geringerer statischer Druck, wodurch der Gegendruck, der beim Einblasen der Luft benötigt wird, reduziert wird.

Nach der Berechnungsvorschrift von Christi, M.Y. et al. (Liquid circulation in airlift reactors, Chemical Engineering Science, vol. 43, No. 3, pp. 451-457, 1988) für Schlaufenreaktoren ohne Einbauten kann die Zunahme der Zirkulationsgeschwindigkeit ($U_{LR}$) aus einer größeren belüfteten Höhe ($h_d$) und einem geringeren Widerstand durch Strömungsumlenkung ($K_B$) berechnet werden (s. Gleichung 1),

$$U_{LR} = \left[ \frac{2gh_D(\varepsilon_r - \varepsilon_d)}{K_B \left( \frac{A_r}{A_d} \right)^2 \frac{1}{(1-\varepsilon_d)^2}} \right]^{0,5} \tag{1}$$

wobei $\varepsilon_r$ bzw. $\varepsilon_d$ den Gasgehalt in einer Aufstiegszone (riser) bzw. in einer Abstiegszone (downcomer), g die Gravitationskonstante sowie $A_r$ und $A_d$ den Flächenquerschnitt in der Aufstiegszone bzw. in der Abstiegszone bezeichnen.

Für die erfindungsgemäße Kombination aus Belüfteranordnung sowie aktiven und/oder passiven Strömungselementen in Membranbioreaktoren ergibt sich bei vorgegebener Belüftungsstärke eine Steigerung der mittleren Flüssigkeitsgeschwindigkeit um bis zu 30 %. Dadurch können bei gleicher Abwasserreinigungsleistung die Energiekosten des Betriebs von Membranbioreaktoren deutlich reduziert werden.

Weiterer Gegenstand der Erfindung ist ein Verfahren zur Behandlung von Abwasser bereitzustellen. Erfindungsgemäß wird das Abwasser in einem Membranbioreaktor durch mindestens ein Membranmodul gefiltert, indem Luft zum Erzeugen einer Aufwärtsströmung in eine Vorrichtung zum Einblasen von Luft eingeleitet wird, das Abwasser mittels einer Aufwärtsströmung aufsteigend durch das mindestens eine Membranmodul im Kreis geführt wird und das Abwasser während der Strömung durch die Filtermembranen filtriert wird, wobei die Aufwärtsströmung durch wenigstens ein aktives und/oder passives Strömungselement beeinflusst wird.

Die erfindungsgemäße Beeinflussung der Aufwärtsströmung erhöht die Zirkulationsgeschwindigkeit und beeinflusst den Strömungsweg. Dadurch kann bei vorgegebener eingeblasener Luftmenge die Effektivität des Verfahrens erhöht werden, das heißt mehr Abwasser aufgereinigt werden. Die eingeblasene Luftmenge beträgt bezogen auf die Membranfläche vorzugsweise 0,1 bis 1 m³/m², vorzugsweise 0,3 bis 0,7 m³/m², insbesondere 0,5 m³/m². Alternativ kann bei gleichbleibender aufzureinigender Abwassermenge die Menge der eingeblasenen Luft reduziert und damit die Energiekosten zur Aufrechterhaltung der Zirkulationsströmung gesenkt werden.

Das erfindungsgemäße Verfahren zeichnet sich insbesondere durch eine gleichmäßige und hohe Strömungsgeschwindigkeit aus. Durch die Wahl eines geeigneten aktiven und/oder passiven Strömungselementes kann die Strömungsgeschwindigkeit den jeweiligen Anforderungen angepasst werden. Durch die erfindungsgemäße Beeinflussung der Aufwärtsströmung durch ein aktives und/oder passives Strömungselement ist auch bei unterschiedlichen Strömungsgeschwindigkeiten eine vollständige Belüftung des gesamten Membranmoduls gewährleistet.

Durch die gleichmäßige Belüftung des Membranmoduls kann das erfindungsgemäße Verfahren vorteilhafterweise kontinuierlich betrieben werden, wobei die Menge des zugeführten Abwassers vorzugsweise der Menge des abfiltrierten gereinigten Wassers entspricht. Eine Unterbrechung der Abwasserbehandlung zur Reinigung der Filtermembranen ist bei normalem Betrieb deutlich seltener erforderlich.

Im Folgenden wird die Erfindung an Hand von Ausführungsbeispielen und Figuren beschrieben, soll allerdings nicht auf diese beschränkt werden.

Kurze Beschreibung der Figuren

Figur 1 zeigt schematische Darstellungen erfindungsgemäßer Membranbioreaktoren (Fig. 1 B und C) im Vergleich zum Stand der Technik (Fig. 1 A).

Figur 2 zeigt schematisch die Blasenverteilung der aufsteigenden Luft in einem erfindungsgemäßen Membranbioreaktor (Fig. 2 B) im Vergleich zum Stand der Technik (Fig. 2 A).

Ausführliche Beschreibung der Figuren

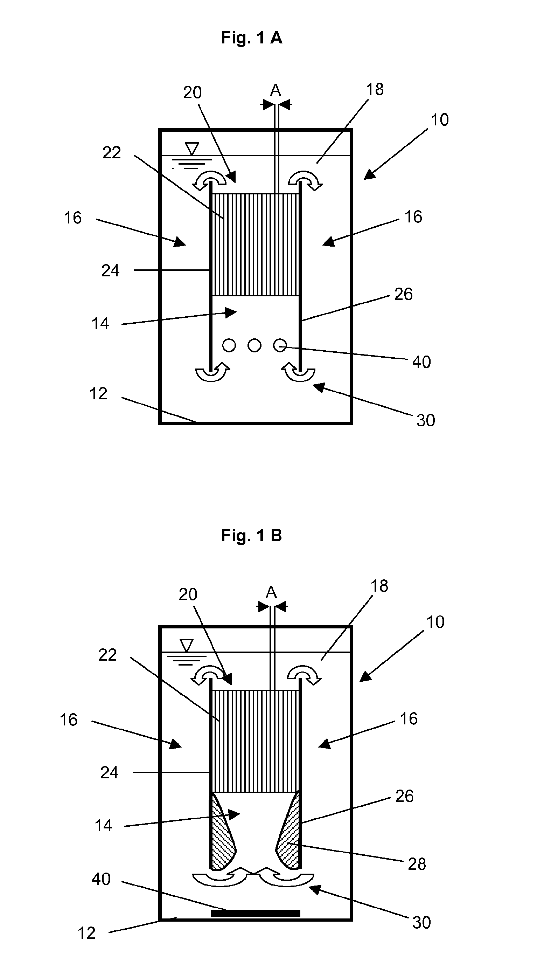

Figur 1 A zeigt einen Abwasser 18 enthaltenden Membranbioreaktor 10 gemäß dem Stand der Technik. In einem Membranmodul 20 wird durch eine Vorrichtung 40 zum Einblasen von Luft eine Zirkulationsströmung 30 induziert. Dabei befindet sich die Aufstiegszone 14 innerhalb des Membranmoduls 20 und die Abstiegszone 16 außerhalb des Membranmoduls 20. Das Membranmodul 20 besteht aus zwei Seitenwänden 24 und dazwischen vertikal angeordneten Filtermembranen 22. Die einzelnen Filtermembranen 22 sind mit einem festen Abstand A zueinander angeordnet. Die Seitenwände 24 reichen in Richtung des Bodens 12 des Membranbioreaktors 10 über die Filtermembranen 22 hinaus und bilden einen Überhang 26. Das Membranmodul 20 hat keinen Kontakt zum Boden 12 des Membranbioreaktors 10. Die Vorrichtung 40 zum Einblasen von Luft ist hier in Form von drei Belüftungsrohren ausgestaltet, die in der Aufstiegszone 14 zwischen den Seitenwänden 24 im Bereich des Überhangs 26 angeordnet sind. Diese Anordnung der Vorrichtung 40 zum Einblasen von Luft hat den Nachteil, dass die Belüftungsrohre in der Aufstiegszone 14 den Strömungswiderstand für das zirkulierende Abwasser 18 erhöhen. Zusätzlich ist eine gleichmäßige und vollständige Belüftung der Filtermembranen 22 nicht gewährleistet, da die Luftblasen senkrecht nach oben aufsteigen und daher die Randbereiche des Membranmoduls 20 nicht belüftet werden.

In Figur 1 B ist ein Membranbioreaktor 10 mit einer erfindungsgemäßen Anordnung der Vorrichtung 40 zum Einblasen von Luft und zusätzlichen aktiven und/oder passiven Strömungselementen 28 gezeigt. Die Vorrichtung 40 zum Einblasen von Luft ist aus der Aufstiegszone 14 heraus unter das Membranmodul 20 verlagert. Die Zirkulationsströmung 30 wird in der Aufstiegszone 14 nicht mehr behindert, so dass der Strömungswiderstand verringert ist. In diesem Falle ist die Vorrichtung 40 zum Einblasen von Luft auf dem Boden 12 des Membranbioreaktors 10 positioniert. Im Bereich des Überhangs 26 sind auf der den Filtermembranen 22 zugewandten Seite der Seitenwände 24 aktive und/oder passive Strömungselemente 28 angeordnet. Die aktiven und/oder passiven Strömungselemente 28 leiten die aufsteigenden Luftblasen in Richtung der Seitenwände 24 um und gewährleisten somit eine vollständige Belüftung der Filtermembranen 22, einschließlich der Randbereiche des Membranmoduls 20.

Die Strömungselemente 28 können - wie dargestellt - im Querschnitt die Form einer Flugzeugtragfläche aufweisen. Auch andere Querschnittformen sind selbstverständlich denkbar. Wichtig ist, dass die Strömung durch die Strömungselemente 28 so beeinflusst wird, dass sie sich möglichst gleichmäßig über den gesamten Querschnitt des Biomembranmoduls verteilt.

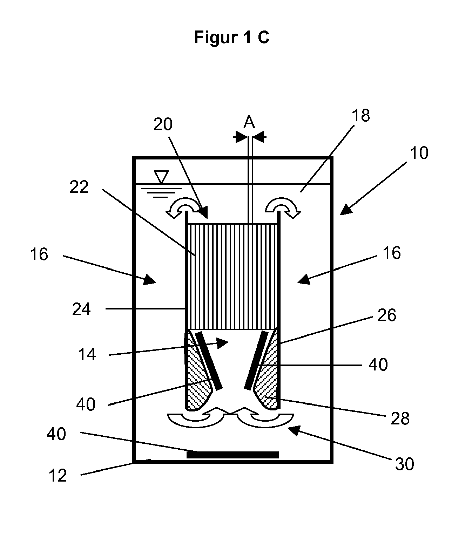

Eine alternative Ausgestaltung eines Membranbioreaktors 10 mit einer erfindungsgemäßen Anordnung der Vorrichtung 40 zum Einblasen von Luft und zusätzlichen aktiven und/oder passiven Strömungselementen 28 ist in Figur 1 C gezeigt. Die Vorrichtung 40 zum Einblasen von Luft ist unterhalb des Membranmoduls 20 auf dem Boden 12 des Membranbioreaktors 10 positioniert. Im Bereich des Überhangs 26 sind auf der den Filtermembranen 22 zugewandten Seite der Seitenwände 24 aktive und/oder passive Strömungselemente 28 angeordnet, die im Querschnitt die Form einer Flugzeugtragfläche aufweisen. Die aktiven und/oder passiven Strömungselemente 28 leiten die aufsteigenden Luftblasen in Richtung der Seitenwände 24 um. Auf den zu den Seitenwänden 24 hin abfallenden Flächen der aktiven und/oder passiven Strömungselemente 28 sind Oberflächenelemente, vorzugsweise weitere Vorrichtungen 40 zum Einblasen von Luft, verstellbare Klappen, aufblasbare Membrane oder dergleichen angeordnet.

Insbesondere handelt es sich bei den Oberflächenelementen um Plattenbelüfter. Vorzugsweise kann die Stellung der Strömungsflächen der Strömungselemente zusätzlich verändern werden. Die zusätzliche aktive Beeinflussung der Strömung verbessert insbesondere bei kleinen Strömungsgeschwindigkeiten die Belüftung der Filtermembranen 22 in den Randbereichen des Membranmoduls 20 und verbessert die Homogenität der Blasenverteilung.

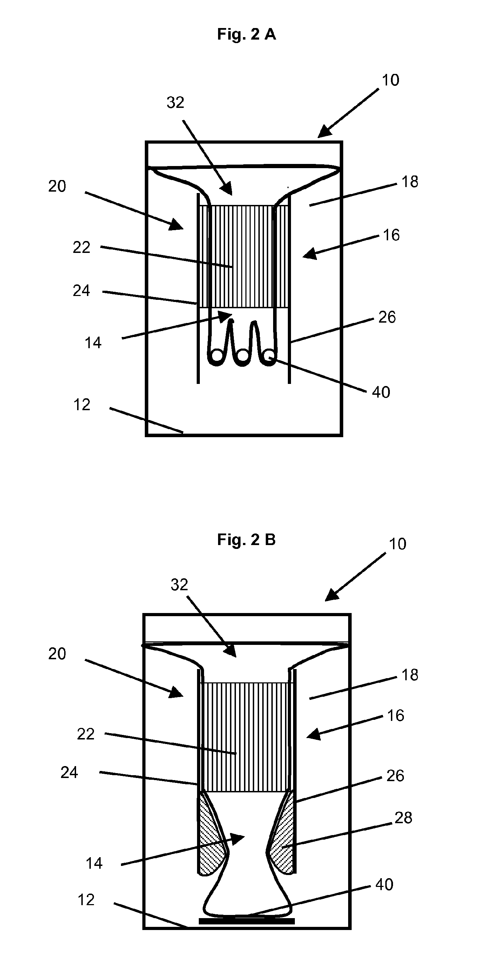

Figur 2 A zeigt schematisch das Strömungsprofil 32 der aufsteigenden Luftblasen in einem Membranbioreaktor 10 aus dem Stand der Technik. Bezugszeichen und Beschreibung gelten wie in Figur 1 A. Im Folgenden werden nur die Abweichungen beschrieben. Die Luftblasen steigen senkrecht über den Belüftungsrohren auf. Im Bereich des Überhangs 26 vereinen sich die drei Einzelströme zu einem gemeinsamen Luftblasenstrom. Allerdings werden die Randbereiche durch diesen Luftblasenstrom nicht belüftet. Insbesondere oberhalb des Membranmoduls 20 ist deutlich zu erkennen, dass das Strömungsprofil der Luftblasen deutlich schmaler ist als der von den Filtermembranen 22 eingenommene Bereich zwischen den beiden Seitenwänden 24.

Figur 2 B zeigt schematisch das Strömungsprofil in der Aufstiegszone 14 des erfindungsgemäßen Membranbioreaktors 10. Bezugszeichen und Beschreibung gelten wie in Figur 1 B. Im Folgenden werden nur die Abweichungen beschrieben. Der Luftblasenstrom wird bodennah durch einen Plattenbelüfter gebildet. Dadurch entsteht ein Luftblasenstrom, der bereits die gesamte Breite des Membranmoduls 20 umfasst. Dann wird der Luftblasenstrom durch die aktiven und/oder passiven Strömungselemente 28 beim Eintritt in das Membranmodul 20 in der Kanalmitte zentriert und anschließend entlang der aktiven und/oder passiven Strömungselemente 28 in Richtung der Seitenwände 24 umgelenkt. Anschließend steigen die Luftblasen entlang der Seitenwände 24 auf, so dass das gesamte Membranmodul gleichmäßig belüftet wird. Insbesondere am Austritt der Luftblasen aus dem Membranmodul 20 ist zu erkennen, dass alle Filtermembranen 22 durch die erfindungsgemäße Anordnung der Vorrichtung 40 zum Einblasen von Luft und den aktiven und/oder passiven Strömungselementen 28 vom belüfteten Bereich umfasst sind.

Bezugszeichenliste

| | |
|---|---|
| 10 | Membranbioreaktor |
| 12 | Boden |
| 14 | Aufstiegszone |
| 16 | Abstiegszone |
| 18 | Abwasser |
| 20 | Membranmodul |
| 22 | Filtermembran |
| 24 | Seitenwand |
| 26 | Überhang |
| 28 | Strömungselement |
| 30 | Zirkulationsströmung |
| 32 | Strömungsprofil |
| 40 | Vorrichtung zum Einblasen von Luft |
| A | Abstand |

**Patentansprüche**

1.  Membranbioreaktor (10) zur Behandlung von Abwasser (18) umfassend

    - mindestens ein Membranmodul (20), das in dem Membranbioreaktor (10) angeordnet ist, wobei das Membranmodul (20) wenigstens zwei Filtermembranen (22) aufweist, die in vertikaler Richtung in dem Membranmodul (20) in einem Abstand (A) zueinander angeordnet sind, und
    - mindestens eine Vorrichtung (40) zum Einblasen von Luft, um in dem mindestens einen Membranmodul (20) eine Aufwärtsströmung zu erzeugen,

    **dadurch gekennzeichnet, dass**
    die Vorrichtung (40) zum Einblasen von Luft unterhalb des mindestens einen Membranmoduls (20) in dem Membranbioreaktor (10) angeordnet ist,
    dass das Membranmodul (20) Seitenwände (24) aufweist, die in Richtung eines Bodens (12) mit einem Überhang (26) über die Filtermembranen (22) hinausragen,
    dass zwischen der Vorrichtung (40) zum Einblasen von Luft und dem Membranmodul (20) wenigstens ein aktives und/oder passives Strömungselement (28) zur Beeinflussung der Aufwärtsströmung auf der den Filtermembranen (20) zugewandten Seite des Überhangs (26) angeordnet ist.

2.  Membranbioreaktor nach Anspruch 1,
    **dadurch gekennzeichnet, dass**
    die Vorrichtung (40) zum Einblasen von Luft auf dem Boden (12) des Membranbioreaktors (10) angeordnet ist.

3.  Membranbioreaktor nach Anspruch 1 oder 2,
    **dadurch gekennzeichnet, dass**
    der Überhang (26) kleiner als 50 cm ist.

4.  Membranbioreaktor nach einem der vorhergehenden Ansprüche,
    **dadurch gekennzeichnet, dass**
    das aktive und/oder passive Strömungselement (28), eine gleich große oder kürzere vertikale Ausdehnung als die Größe des Überhangs (26) aufweist.

5.  Membranbioreaktor nach einem der vorhergehenden Ansprüche,
    **dadurch gekennzeichnet, dass**
    das aktive und/oder passive Strömungselement (28) aus einem biologisch und chemisch beständigen, nicht porösen Material, vorzugsweise Kunststoff, Beton oder dergleichen besteht.

6.  Membranbioreaktor nach Anspruch 5,

**dadurch gekennzeichnet, dass**
der Kunststoff Polyvinylchlorid, Polyethylen, Polypropylen oder Polytetrafluorethylen, vorzugsweise Polyvinylchlorid ist.

**7.** Membranbioreaktor nach einem der vorhergehenden Ansprüche,
**dadurch gekennzeichnet, dass**
in die aktiven und/oder passiven Strömungselemente (28) zusätzliche Luftauslässe zum Einblasen von Luft integriert sind.

**8.** Membranbioreaktor nach einem der vorhergehenden Ansprüche,
**dadurch gekennzeichnet, dass**
das aktive und/oder passive Strömungselement (28) im Querschnitt dreieckig oder tropfenförmig ist oder ein Tragflächenprofil aufweist.

**9.** Membranbioreaktor nach einem der vorhergehenden Ansprüche,
**dadurch gekennzeichnet, dass**
die Vorrichtung (40) zum Einblasen von Luft ein Plattenbelüfter ist.

**10.** Membranbioreaktor nach einem der vorhergehenden Ansprüche,
**dadurch gekennzeichnet, dass**
die von der Vorrichtung (40) zum Einblasen von Luft erzeugten Luftblasen einen Durchmesser von 2 bis 8 mm, vorzugsweise 3 bis 5 mm aufweisen.

**11.** Membranbioreaktor nach einem der vorhergehenden Ansprüche,
**dadurch gekennzeichnet, dass**
der Abstand (A) zwischen den Filtermembranen (22) 3 bis 12 mm, vorzugsweise 6 bis 10 mm, noch bevorzugter 7 mm beträgt.

**12.** Membranbioreaktor nach einem der vorhergehenden Ansprüche,
**dadurch gekennzeichnet, dass**
der Abstand zwischen der Vorrichtung (40) zum Einblasen von Luft und dem Beginn der Seitenwände (24) des Membranmoduls (20) 5 bis 50 cm, vorzugsweise 35 cm beträgt.

**13.** Verfahren zur Behandlung von Abwasser (18), wobei das Abwasser (18) in einem Membranbioreaktor (10) durch mindestens ein Membranmodul (20) gefiltert wird, indem

- Luft zum Erzeugen einer Aufwärtsströmung in eine Vorrichtung (40) zum Einblasen von Luft eingeleitet wird,
- das Abwasser (18) mittels einer Aufwärtsströmung aufsteigend durch das mindestens eine Membranmodul (20) geführt wird und
- das Abwasser (18) während der Strömung durch die Filtermembranen (22) filtriert wird,

**dadurch gekennzeichnet, dass**
die Aufwärtsströmung durch wenigstens ein aktives und/oder passives Strömungselement (28) beeinflusst wird.

**14.** Verfahren nach Anspruch 13,
**dadurch gekennzeichnet, dass**
die durch die Vorrichtung (40) zum Einblasen von Luft eingeblasene Luftmenge je $m^2$ Membranfläche 0,1 bis 1 $m^3/m^2$, vorzugsweise 0,3 bis 0,7 $m^3/m^2$, insbesondere 0,5 $m^3/m^2$ beträgt.

**15.** Verfahren nach Anspruch 13 oder 14,
**dadurch gekennzeichnet, dass**
das Verfahren kontinuierlich betrieben wird und die Menge des zugeführten Abwassers (18) gleich der Menge des abfiltrierten gereinigten Wassers ist.

**Fig. 1 A**

**Fig. 1 B**

**Figur 1 C**

## Fig. 2 A

## Fig. 2 B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0510328 B1

**In der Beschreibung aufgeführte Nicht-Patentliteratur**

- **von Christi, M.Y. et al.** Liquid circulation in airlift re-actors. *Chemical Engineering Science,* 1988, vol. 43 (3), 451-457